# EUROPEAN PATENT SPECIFICATION

(11) **EP 1 911 945 B1**
(45) Date of publication and mention of the grant of the patent: **02.02.2011**
(21) Application number: 07018317.3
(22) Date of filing: 18.09.2007
(51) Int. Cl.: F01N 13/14, F01N 13/08

(54) **Exhaust system for motorcycle**
Abgassystem für ein Motorrad
Système d'échappement pour motocyclette

(30) Priority: 06.10.2006 JP 2006274720
(43) Date of publication of application: 16.04.2008
(73) Proprietor: HONDA MOTOR CO., LTD., Minato-ku, Tokyo 107-8556 (JP)
(72) Inventor: Honda, Koichiro, Wako-shi, Saitama 351-0193 (JP); Okada, Naoki, Wako-shi, Saitama 351-0193 (JP); Kuboshima, Kenichiro, Wako-shi, Saitama 351-0193 (JP); Kuramitsu, Tomofumi, Wako-shi, Saitama 351-0193 (JP)
(74) Representative: Liska, Horst

(56) References cited:
- EP-A- 1 577 208
- JP-A- 5 209 519
- JP-A- 10 121 957
- JP-A- 2001 073 758
- JP-A- 2005 344 552

## Description

### Technical Field

The present invention relates to an exhaust system for a motorcycle according to the preamble of claim 1, in which an exhaust muffler is connected to an exhaust pipe extending from a cylinder head of an engine body, and in which a protector covers the upper portion of the exhaust muffler and the outer side surface of the exhaust muffler.

### Background Art

An exhaust system according to the preamble of claim 1 is known from JP 10-121957 A.

JP 2001-073758 A discloses a further exhaust system for a motorcycle, in which an outer side surface of an exhaust muffler is covered with a single protector made of synthetic resin.

Japanese Unexamined Patent Application Publication No. JP 05-209519 A discloses a structure in which a single metal protector covers the upper portion of an exhaust muffler. Japanese Patent Application Laid-Open Publication No. JP 2005-344552 A discloses another structure, in which synthetic-resin double protector members--an inner and an outer protector memberscover the outer side surface of the exhaust muffler.

### Problems to be Solved by the Invention

An advantage of the disclosure of Japanese Unexamined Patent Application Publication No. JP 05-209519 A is that the metal protector is easy to be cooled by the traveling wind. Within the metal protector that has a high thermal conductivity, the portion that covers the upper portion of the exhaust muffler becomes at a higher temperature than any other portion of the protector, and the heat transferred to the protector at the above-mentioned portion tends to spread to the entire portion of the protector. In addition, a metallic surface extending all over the side surface of the exhaust muffler shows a strong presence of the muffler, but makes the muffler look heavy. A heavy-looking appearance is unlikely to match the sporty image of motorcycles. An advantage of the disclosure of Japanese Patent Application Laid-Open Publication No. JP 2005-344552 A, on the other hand, is that the synthetic-resin double--inner and outer--protector members constitute the protector and can reduce the spread of the heat. The protector, however, tends to accumulate heat and is difficult to be cooled by the traveling wind. In addition, the synthetic-resin protector needs to enhance the durability, which is not a pressing problem in the case of metal protectors. Moreover, a glossy finish, when desired, needs a coating process or the like, and this makes the protector expensive.

It is an object of the present invention to provide an exhaust system for a motorcycle having improved heat insulating properties.

### Means for Solving the Problems

This object is achieved by an exhaust system for a motorcycle according to claim 1.

The present invention provides an exhaust system for a motorcycle with the following characteristics. In the exhaust system, an exhaust muffler is connected to an exhaust pipe extending from a cylinder head of an engine body, and the outer side surface of the exhaust muffler is covered with a protector. In the exhaust system, the protector includes a first protector member, which is made of a metal, and which covers the outer side surface of the exhaust muffler. The protector also includes a second protector member, which is made of a synthetic resin, and which covers the first protector member from the outer side while an upper portion of the first protector member is left uncovered so as to be exposed to the outside.

Furthermore, the first and the second protector members are fastened together to, and supported by, the exhaust muffler.

Moreover, a traveling-wind introduction port is formed in the second protector member so as to guide the traveling wind towards any one of the outer surface of the exhaust muffler and the first protector member.

According to a second aspect of the present invention, the first and the second protector members are supported by the exhaust muffler with respective elastic members interposed in between.

According to a third aspect of the present invention, a tail pipe is formed in the exhaust muffler so as to protrude rearward from the rear end of the exhaust muffler A tail-pipe cover, which is made of a synthetic resin, and which covers the rear end of the exhaust muffler and the tail pipe, is attached to the exhaust muffler.

According to a fourth aspect of the present invention, within the exhaust pipe, a part exposed from a body cover is covered with an exhaust-pipe protector.

Note that rubber mounts 43, 52 correspond to the elastic member of the present invention.

### Effects of the Invention

According to the present invention, by exposing the upper portion of the metallic first protector member to the outside, favorable heat radiation is accomplished. Meanwhile, the second protector member, made of a synthetic resin, covers the first protector member from the outer side, and thus an excellent heat insulating property is obtained. Taking advantage of metals and synthetic resins, the heat from the exhaust muffler is blocked as the protector has an excellent heat insulating property. In addition, a higher durability of the first protector member is accomplished. Moreover, the exposed upper portion of the first protector member with metallic luster gives a classy impression to the protector, and improves the external appearance of the protector. On the other hand, within the protector, the lower portion of a part that is visible from the outside is composed of the second protector member, which is made of a synthetic resin and which is thus not glossy. Consequently, the lower portion of the protector has a low profile, so that the exhaust muffler is made to look not as big as it really is.

Moreover, a smaller number of fastening parts are needed for the exhaust muffler to support the first and the second protector members, and this contributes to a reduction in the number of component parts.

Furthermore, the traveling wind introduced into the protector is used to effectively cool down the metallic exhaust muffler or the metallic first protector member. Thus, an improved cooling efficiency is accomplished.

According to the second aspect of the present invention, the vibration to be transmitted from the exhaust muffler to the protector side is reduced, and generation of the noise due to the vibration is also reduced. In addition, the amount of heat transferred, by heat conduction, from the exhaust muffler to the protector side is also made smaller.

According to the third aspect of the present invention, the heat from the tail pipe and the rear end portion of the exhaust muffler is blocked by the tail-pipe cover.

According to the fourth aspect of the present invention, within the exhaust pipe, the portion exposed from the body cover is covered with the exhaust pipe protector. As a result, heat from the exhaust pipe is blocked from radiating to the outside.

### Brief Description of the Drawings

Fig. 1 is a right side view of a scooter-type motorcycle.
Fig. 2 is a left side view of the scooter-type motorcycle.
Fig. 3 is an enlarged side view showing the vicinity of an exhaust muffler.
Fig. 4 is a cross-sectional view taken along the line 4-4 in Fig. 3.
Fig. 5 is a cross-sectional view taken along the line 5-5 in Fig.3.
Fig. 6 is a cross-sectional view taken along the line 6-6 in Fig. 3.
Fig. 7 is a view on arrow 7 in Fig. 3.
Fig. 8 is a cross-sectional view taken along the line 8-8 in Fig. 7.
Fig. 9 is a cross-sectional view taken along the line 9-9 in Fig. 7.
Fig. 10 is an enlarged cross-sectional view taken along the line 10-10 in
Fig. 1.

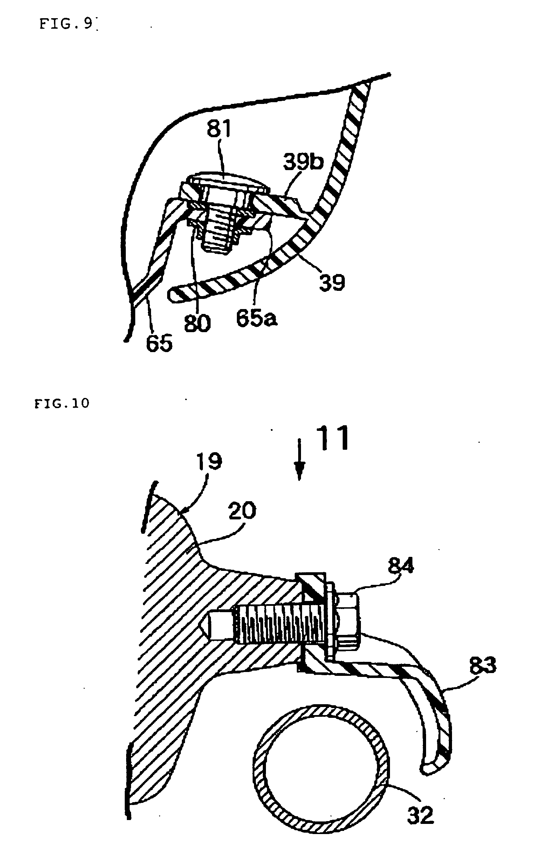

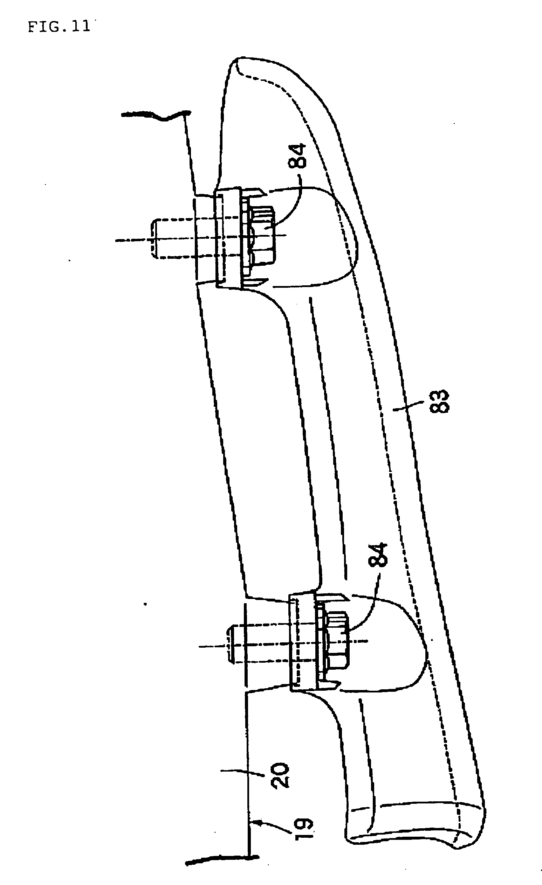

Fig. 11 is a view on arrow 11 in Fig. 10.

### Best Mode for Carrying Out the Invention

Hereinbelow, a mode for carrying out the present invention will be described using an embodiment of the present invention illustrated in accompanying drawings.

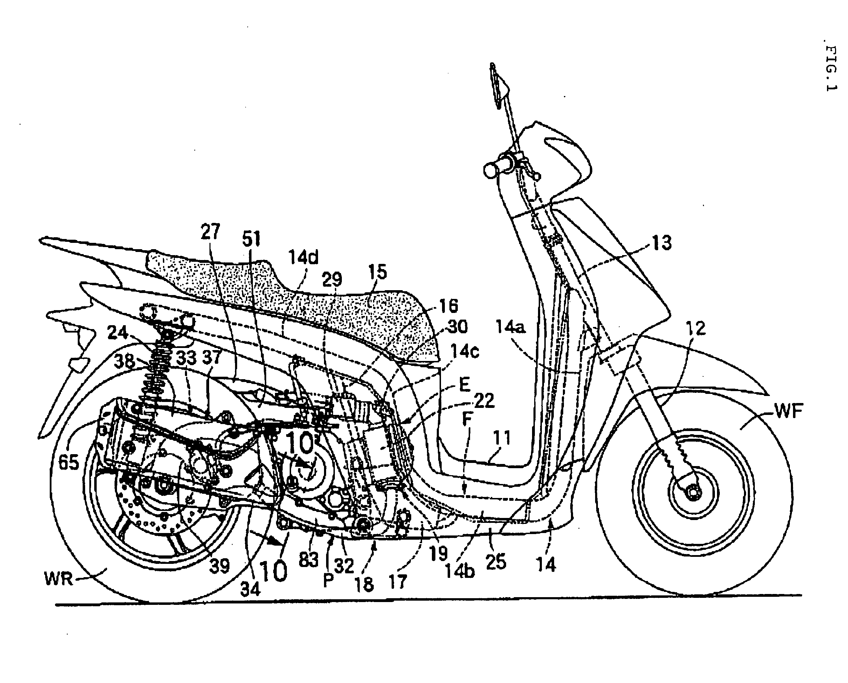

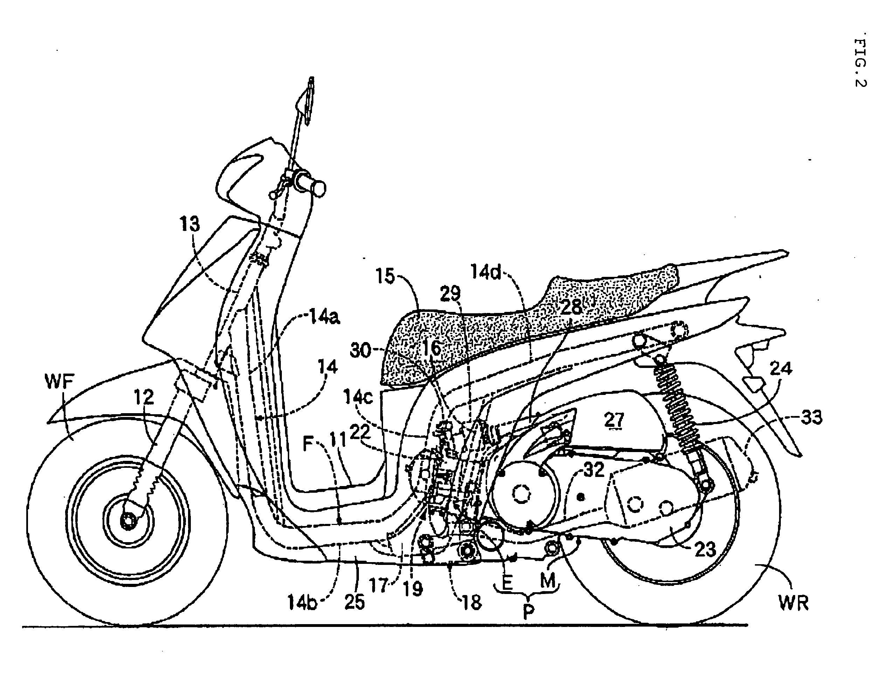

Fig. 1 and Fig. 2 show a low-floor scooter-type motorcycle with a floor 11. A body frame F that the motorcycle has includes a head pipe 13, which rotatably supports a steerable front fork 12, which, in turn, pivotally supports a front wheel WF. The body frame F also includes a right and left pair of side frames 14..., each of which has a front end portion joined to the head pipe 13. Each side frame 14 is formed by bending a single pipe, and thus includes, as a unit, a down frame portion 14a, a lower frame portion 14b, a rising frame portion 14c, and a seat rail portion 14d. The down frame portion 14a droops down from the head pipe 13. The lower frame portion 14b is formed as extending from the bottom end of the down frame portion 14a and then rearwards under the floor 11. The rear half of the lower frame portion 14b is formed so as to be inclined upward to the rear. The rising frame portion 14c extends from the rear end of the lower frame portion 14b, and rises upward at a position behind the floor 11. The seat rail portion 14d extends rearward from the rear end of the rising frame portion 14c so as to support a riding seat 15.

In each of the side frames 14..., a rear sub-frame 16 is provided between a rear portion of the lower frame portion 14b and a front portion of the seat rail portion 14d. Each rear sub-frame 16 is positioned below the seat rail portion 14d and at the rear of the rising frame portion 14c. Each of pivot plates 17... is provided between each of the two side frames 14... and the corresponding one of the rear sub-frames 16....

The pivot plates 17... provided to the body frame F support the power unit P with a link mechanism 18 so as to swing up and down. The power unit P includes an engine E, which is placed in front of a rear wheel WR, and also includes a transmission system M, which is placed on the left side of the rear wheel WR. The rear wheel WR is pivotally supported by a rear portion of the power unit P. The transmission system M includes a V-belt continuously variable transmission (not illustrated) and a reduction gear train (not illustrated), which transmits the power outputted from the continuously variable transmission to the axle of the rear wheel WR while reduces the speed of the outputted.

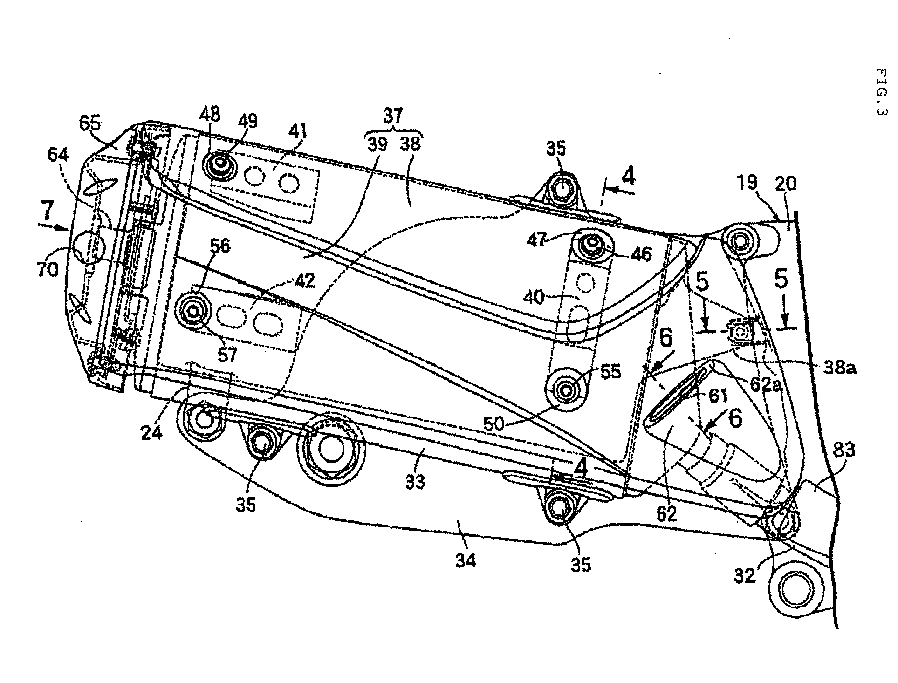

The engine E is a single-cylinder water-cooling four-cycle engine. A crankcase 20 (see Fig. 3) forms a part of an engine body 19 of the engine E includes. A transmission case 23 is provided contiguously to the crankcase 20, and extends to the left side of the rear wheel WR. The transmission system M is housed in the transmission case 23. A swing arm 34 is fixed to the crankcase 20, and extends to the right side of the rear wheel WR. The swing arm 34 pivotally supports the rear wheel WR together with the transmission case 23 of the power unit P. Each of Rear cushion units 24, 24 is provided between rear portion of the respective seat rail portions 14d... and each one of a rear portion of the transmission case 23 and a rear portion of the swing arm 34.

A body cover 25 of a synthetic resin is provided to cover a part of the engine body 19 and the body frame F, and the floor 11 is formed in the body cover 25. As has been described thus far, the body of a scooter-type vehicle with a sporty, light-weighted image is formed by the simple body frame F and the body cover 25 to cover a relatively small area.

An air cleaner 27 is placed above and supported by the transmission case 23. The upstream end of an inlet pipe 28 is connected to the air cleaner 27. A throttle body 29 is provided between the downstream end of the inlet pipe 28 and a cylinder head 22 of the engine body 19. A fuel injection valve 30 is attached to the cylinder head 22 to inject the fuel into the air passing through the throttle body 29.

Now, refer also to Fig. 3. An exhaust pipe 32 extends from a right-side lower portion of the crankcase 20 to the right side of the rear wheel WR. The exhaust pipe 32 has an upstream end connected to the lower side surface of the cylinder head 22 while the downstream end of the exhaust pipe 32 is connected to an exhaust muffler 33. The exhaust muffler 33 is placed in a position such that the swing arm 34 is interposed between the exhaust muffler 33 and the rear wheel WR. The exhaust muffler 33 is fastened to the swing arm 34 with bolts 35... at a position in the upper portion of the exhaust muffler 33 and at two positions--one in front and the other in the rear with a certain interval--in the lower portion thereof.

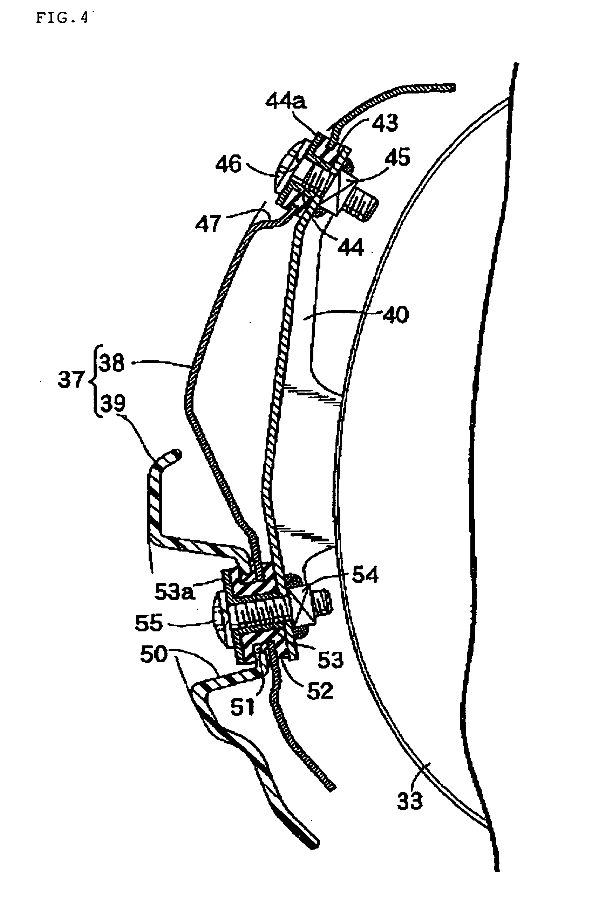

Now, refer also to Fig. 4. A protector 37 is provided to cover the upper portion of and the outer side surface of the exhaust muffler 33. The protector 37 is composed of a first protector member 38, which is made of a metal, and a second protector member 39, which is made of a synthetic resin.

The first protector member 38 is formed to cover at least the outer side surface of the exhaust muffler 33. The first protector member 38 of this embodiment is formed to cover the outer side surface of the exhaust muffler 33, and is made of a stainless steel, for example. The second protector member 39, on the other hand, is formed to cover the first protector member 38 from the outside while the upper portion of the first protector member 38 is left uncovered so as to be exposed to the outside. The second protector member 39 of this embodiment is formed to cover the lower portion of the first protector member 38, and is made of a synthetic resin, such as a polyamide resin that is excellent in heat resistance.

A first bracket 40, elongated in the vertical direction, is fixed, by welding or the like, to a front portion of the outer side surface of the exhaust muffler 33. A second and a third brackets 41 and 42 are fixed, by welding or the like, to a rear portion of the outer side surface of the exhaust muffler 33 respectively at two positions--one in the upper and the other in the lower positions--with a certain interval, as Fig. 3 shows.

A recessed portion 47, sunk inward, is formed in the first protector member 38, and at a position corresponding to an upper portion of the first bracket 40. A rubber mount 43 is installed in the center of the recessed portion 47. The rubber mount 43 is an elastic member and has a first end that is brought into contact with the upper portion of the first bracket 40. A collar 44 is inserted into the rubber mount 43, and has a brim portion 44a, which is brought into contact with a second end of the rubber mount 43. A bolt 46 is inserted into the collar 44 and the first bracket 40, and is screwed into a weld nut 45, which is firmly attached to the inner surface side of the upper portion of the first bracket 40. As seen from the above, a rear portion of the first protector member 38 is supported in an upper portion of the first bracket 40 via an elastic support structure with a rubber mount 43.

Now, refer to Fig. 3. A recessed portion 48, sunk inward, is formed in a rear portion of the first protector member 38, and at a portion corresponding to the second bracket 41. A bolt 49 is disposed at the center of the recessed portion 48, and fastens the rear portion of the first protector member 38 to the second bracket 41. In addition, an elastic support structure is provided between a rear portion of the first protector member 38 and the second bracket 41. The provided elastic support structure is similar to the structure provided to elastically support the front portion of the first protector member 38 at the upper portion of the first bracket 40. As seen from the above, a front and a rear portions of the upper portion of the first protector member 38 are elastically supported by an upper portion of the first bracket 40 and by the second bracket 41, both of which brackets are firmly attached to the exhaust muffler 33.

Now, refer back to Fig. 4. A recessed portion 50, sunk inward, is formed in a front portion of the second protector member 39, and at a position corresponding to a lower portion of the first bracket 40. A collar 51 is installed in the center of the recessed portion 50. The collar 51 is brought into contact with the outer surface of the first protector member38. In addition, a rubber mount 52 is installed between the first and the second protector members 38, 39, which are brought into contact with each other with the collar 51 interposed in between. Here, a first end of the rubber mount 52 is brought into contact with a lower portion of the first bracket 40. Another collar 53, which has a brim portion 53a is inserted into the rubber mount 52. The brim portion 53a is brought into contact with a second end of the rubber mount 52. A bolt 55 is inserted into the collar 53 and the first bracket 40, and is screwed into a weld nut 54, which is firmly attached to the inner surface side of the lower portion of the first bracket 40. As seen from the above, the bolt 55 is used commonly to fasten both the front portion of the second protector member 39 and the front portion of the first protector member 38, which front portion is covered with the second protector member 39. The two portions thus fastened together are elastically supported by the lower portion of the first bracket 40.

Now, refer to Fig. 3. A recessed portion 56, sunk inward, is formed in a rear portion of the second protector member 39, and at a portion corresponding to the third bracket 42. A bolt 57 is used commonly to fasten both the rear portions of the respective first and second protector members 38 and 39 to the third bracket 42. In addition, an elastic support structure is provided between the third bracket 42 and the rear portions of the respective first and second protector members 38 and 39. The provided elastic support structure is similar to the structure provided to elastically support the front portions of the respective first and second protector members 38 and 39 at the lower portion of the first bracket 40. As seen from the above, the second protector member is supported by the exhaust muffler 33 by being fastened together with the first protector member 38 to the exhaust muffler 33.

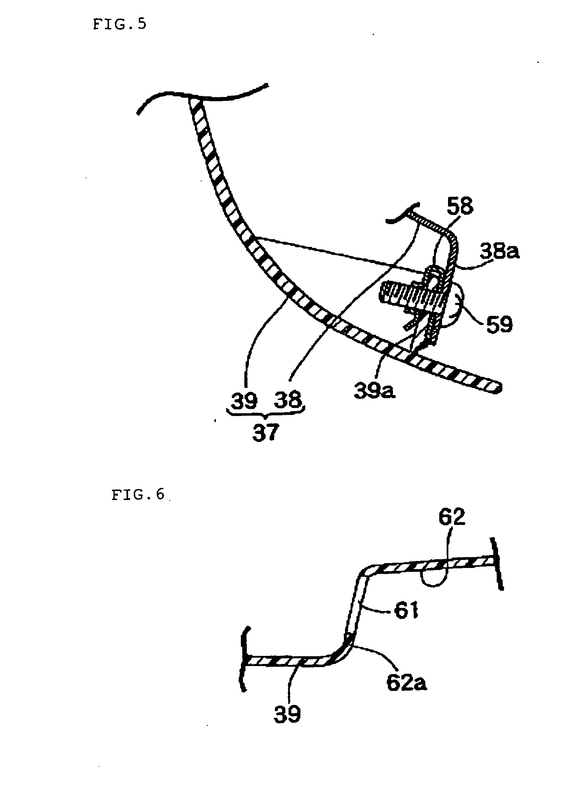

Now, refer to Fig. 5. A support-plate portion 38a is formed integrally with the first protector member 38 so as to protrude forward from a front portion of the first protector member 38. An attachment-plate portion 39a is formed in the inner surface of the second protector member 39, and is formed integrally with the second protector member 39. The attachment-plate portion is opposed to the support-plate portion 38a from the outer side. In addition, a nut 58 is attached to the attachment-plate portion 39a, and a screw member 59, which is inserted into the respective support-plate portion 38a and attachment-plate portion 39a, is screwed into the nut 58.

Now, refer also to Fig. 6. A recessed portion 62 is formed in a front portion of the second protector member 39 with its depth gradually becoming shallower to the front. A step portion 62, which faces forward, is formed at the rear end of the recessed portion 62. A traveling-wind introduction port 61 is formed in the step portion 62a, and guides the traveling wind towards the outer side surface of the exhaust muffler 33 or towards the first protector member 38.

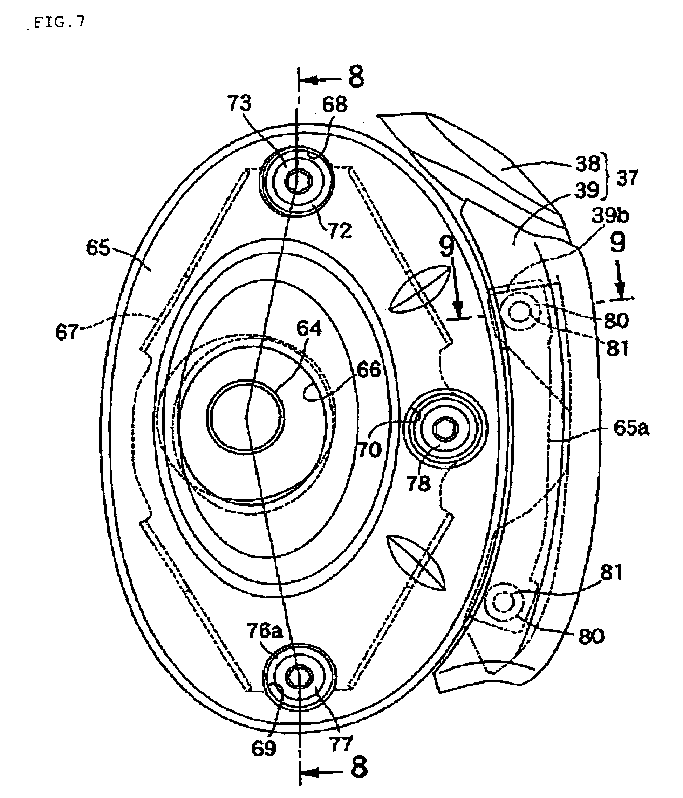

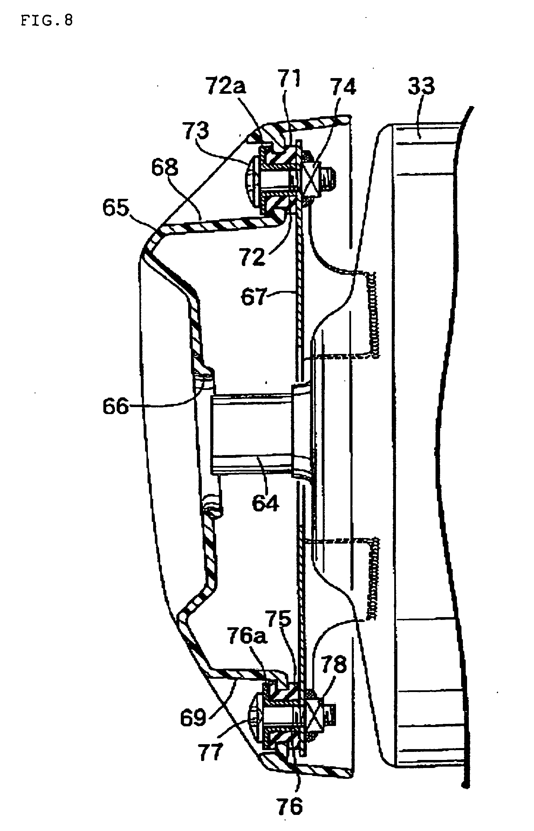

Now, refer also to Fig. 7 and Fig. 8. A tail pipe 64 is formed in the exhaust muffler 33 so as to protrude rearward from a center portion of the rear end of the exhaust muffler 33. A tail-pipe cover 65 is attached to the exhaust muffler 33. The tail-pipe cover 65, with an opening portion 66 facing the rear end of the tail pipe 64, covers the rear end of the exhaust muffler 33 and the tail pipe 64. The tail-pipe cover is made of a synthetic resin, such as a polyamide resin that is excellent in heat resistance.

A fourth bracket 67 is firmly attached, by welding or the like, to the rear end of the muffler 33. A recessed portion 68, sunk inward, is formed in the tail-pipe cover 64, above the tail pipe 64, and at a position corresponding to an upper portion of the fourth bracket 67. A rubber mount 71 is installed in the center of the recessed portion 68. The rubber mount 71 has a first end that is brought into contact with the upper portion of the fourth bracket 67. A collar 72 is inserted into the rubber mount 71, and has a brim portion 72a, which is brought into contact with a second end of the rubber mount 71. A bolt 73 is inserted into the collar 72 and the fourth bracket 67, and is screwed into a weld nut 74, which is firmly attached to the inner surface side of the upper portion of the fourth bracket 67. As seen from the above, the upper portion of the tail-pipe cover 64 is supported by the upper portion of the fourth bracket 67 via an elastic support structure with a rubber mount 71.

A recessed portion 69, sunk inward, is formed in the tail-pipe cover 64, below the tail pipe 64, and at a position corresponding to a lower portion of the fourth bracket 67. A rubber mount 75 is installed in the center of the recessed portion 69. The rubber mount 75 has a first end that is brought into contact with the lower portion of the fourth bracket 67. A collar 76 is inserted into the rubber mount 75, and has a brim portion 76a, which is brought into contact with a second end of the rubber mount 75. A bolt 77 is inserted into the collar 76 and the fourth bracket 67, and is screwed into a weld nut 78, which is firmly attached to the inner surface side of the lower portion of the fourth bracket 67. As seen from the above, the lower portion of the tail-pipe cover 64 is supported by the lower portion of the fourth bracket 67 via an elastic support structure with a rubber mount 75.

In addition, a recessed portion 70, sunk inward, is formed in the tail-pipe cover 65, and at a portion positioned on the right side of the tail pipe 64 when viewed towards the front in the traveling direction of the motorcycle. A bolt is disposed at the center of the recessed portion 70, and fastens the tail-pipe cover 65 to the fourth bracket 67. In addition, an elastic support structure is provided between the fourth bracket 67 and a portion of the tail-pipe cover 65, which portion is located at the right side of the tail pipe 64. The provided elastic support structure is similar to the elastic support structures provided to each of the upper and the lower portions of the fourth bracket 67. As seen from the above, the fourth bracket 67, which is firmly attached to the rear end of the exhaust muffler 33, elastically supports the tail-pipe cover 65.

Now, refer also to Fig. 9. An attachment-plate portion 39b, stretching vertically, is formed in the inner surface of a rear portion of the second protector member 39 within the protector 37, and is formed integrally with the second protector member 39. A support-plate portion 65a is formed integrally with the tail-pipe cover 65 so as to be opposed to the attachment-plate portion 39b from the rear side. In addition, nuts 80... are attached to each of the upper and the lower portions of the support-plate portion 65a. Screw members 81..., which are inserted into respective upper and lower portions of each of the attachment-plate portion 39b and of the support-plate portion 65a and, are screwed into the corresponding nuts 58. In this way, the lower portion of the second protector member 39 is elastically supported by the rear end of the exhaust muffler 33 with the tail-pipe cover 65.

Incidentally, as Fig. 1 shows, a part of the exhaust pipe 32 extending to the right side of the rear wheel WR from the right-side lower portion of the crankcase 20 is disposed as being exposed from the body cover 25. Within the exhaust pipe 32, the part exposed from the body cover 25 is covered with an exhaust-pipe protector 83 made of a synthetic resin. As Fig. 10 and Fig. 11 show, the exhaust-pipe protector 83 is fastened, by bolts 84,84, to the crankcase 20 of the engine body 19, for example at two positions--one in front and the other at the rear--with a certain interval in between.

Subsequently, some of the advantageous effects of this embodiment will be described. The protector 37, which covers the outer side surface of the exhaust muffler 33, is composed of the first and the second protector members 38 and 39. The metallic first protector member 38 covers at least the outer side surface of the exhaust muffler 33. On the other hand, the second protector member 39, made of a synthetic resin, covers the first protector member 38 from the outer side while the upper portion of the first protector member 38 is left uncovered and thus exposed to the outside. Accordingly, by exposing the upper portion of the metallic first protector member 38 to the outside, favorable heat radiation can be accomplished. Meanwhile, the second protector member 39, made of a synthetic resin, covers the first protector member 38 from the outer side, and thus excellent heat insulating property can be obtained. Taking advantage of metals and synthetic resins, the heat from the exhaust muffler 33 can be blocked as the protector has an excellent heat insulating property. In addition, a higher durability of the first protector member 38 is accomplished. Moreover, the exposed upper portion of the first protector member 38 with metallic luster gives a classy impression to the protector 37, and improves the external appearance of the protector 37. On the other hand, within the protector 37, the lower portion of a part that is visible from the outside is composed of the second protector member 39, which is made of a synthetic resin and which is thus not glossy. Consequently, the lower portion of the protector 37 can be made a low profile, so that the exhaust muffler 33 can be made to look not as big as it really is.

In addition, the first and the second protector members 38 and 39 are fastened together to, and are supported by, the exhaust muffler 33 with bolts 55 and 57. Consequently, a smaller number of fastening parts are needed to support the first and the second protector members 38 and 39 by the exhaust muffler 33, and this can contribute to a reduction in the number of component parts.

Moreover, the first and the second protector members 38, 39 are supported by the exhaust muffler 33 with rubber mounts 43,52 interposed in between respectively. Consequently, the vibration that might be transmitted from the exhaust muffler 33 to the protector 37 side can be reduced, and generation of the noise due to the vibration can also be reduced. In addition, the amount of heat transferred, by heat conduction, from the exhaust muffler 33 to the protector 37 can also be made smaller.

The traveling-wind introduction port 61 is formed in the second protector member 39 to guide the traveling wind towards the outer side surface of the exhaust muffler 33 or towards the first protector member 38. Consequently, the traveling wind introduced into the protector 37 can be used to effectively cool down the metallic exhaust muffler 33 or the metallic first protector member 38. Thus, an improved cooling efficiency can be accomplished.

Moreover, the tail pipe 64 is formed in the exhaust muffler 33 and protrudes rearward from the rear end of the exhaust muffler 33, meanwhile the tail-pipe cover 65, which is made of a synthetic resin, and which covers the rear end of the exhaust muffler 33 and the tail pipe 64, is attached to the exhaust muffler 33. Consequently, the heat from the tail pipe 64 and the rear end portion of the exhaust muffler 33 can be blocked by the tail-pipe cover 65.

Furthermore, within the exhaust pipe 32, the portion exposed from the body cover 25 is covered with the exhaust pipe protector 83. Consequently, the heat from the exhaust pipe 32 is blocked from radiating to the outside.

An embodiment of the present invention has been described thus far. The present invention is not limited to the embodiment described thus far, and various modifications can be made without departing from the invention defined by the claims.

In an exhaust system of a motorcycle in which an exhaust muffler 33 is connected to an exhaust pipe 32 extending from a cylinder head 22 of an engine body 19, and in which the outer side surface of the exhaust muffler 33 is covered with a protector 37, an excellent durability and appearance are to be accomplished, and an excellent heat resistance property is to be accomplished to block the heat from the exhaust muffler 33. The invention now provides a protector 37 composed of a first protector member 38 and a second protector member (39). The metallic first protector member 38 covers at least the outer side surface of an exhaust muffler 33. The second protector member 39, which is made of a synthetic resin, covers the first protector member 38 from the outer side while an upper portion of the first protector member 38 is left uncovered so as to be exposed to the outside.

## Claims

1. An exhaust system for a motorcycle comprising:
an exhaust muffler (33) connected to an exhaust pipe (32) extending from a cylinder head (22) of an engine body (19), and
a protector (37), at least partially covering the outside of the exhaust muffler (33),
wherein the protector (37) includes:
a first protector member (38), which covers the outer side surface of the exhaust muffler (33); and
a second protector member (39), which covers the first protector member (38) from the outer side;
wherein the first (38) and the second (39) protector members are fastened together to, and supported by, the exhaust muffler (33),
**characterized in that**
the first protector member (38) is made of a metal and additionally to the outer side surface covers the upper portion of the exhaust muffler (33),
the second protector member (39) is made of a synthetic resin and covers the first protector member (38) from the outer side while leaving the portion of the first protector member (38) covering the upper portion of the exhaust muffler (33) uncovered so as to be exposed to the outside, and
a traveling-wind introduction port (61) is formed in the second protector member (39) so as to guide the traveling wind towards any one of the outer surface of the exhaust muffler (33) and the first protector member (38), wherein
said traveling-wind introduction port (61) is located forward the portion that the first and the second protector members (38, 39) are fastened together to.

2. The exhaust system for a motorcycle according to claim 1 wherein the first (38) and the second (39) protector members are supported by the exhaust muffler (33) with respective elastic members (43, 52) interposed in between.

3. The exhaust system for a motorcycle according to any one of claims 1 to 2, wherein a tail pipe (64) is formed in the exhaust muffler (33) so as to protrude rearward from the rear end of the exhaust muffler, and a tail-pipe cover (65), which is made of a synthetic resin, and which covers the rear end of the exhaust muffler (33) and the tail pipe (64), is attached to the exhaust muffler (33).

4. The exhaust system for a motorcycle according to any one of claims 1 to 3, **characterized in that**, within the exhaust pipe (32), a part exposed from a body cover is covered with an exhaust-pipe protector (83).

5. The exhaust system for a motorcycle according to any one of claims 1 to 4, wherein the first and the second protector members (38, 39) are brought into contact with each other with a collar (51) interposed in between.

## Patentansprüche

1. Auspuffsystem für ein Kraftrad, umfassend:
einen Auspufftopf (33), welcher mit einem Auspuffrohr (32) verbunden ist,
das sich von einem Zylinderkopf (22) eines Motorkörpers (19) aus erstreckt, und
eine Schutzeinrichtung (37), welche die Außenseite des Auspufftopfs (33) zumindest teilweise abdeckt,
wobei die Schutzeinrichtung (37) umfasst:
ein erstes Schutzeinrichtungselement (38), welches die Außenseitenfläche des Auspufftopfs (33) abdeckt; und
ein zweites Schutzeinrichtungselement (39), welches das erste Schutzeinrichtungselement (38) von der Außenseite abdeckt;
wobei das erste Schutzeinrichtungselement (38) und das zweite Schutzeinrichtungselement (39) gemeinsam an dem Auspufftopf (33) befestigt und durch diesen gelagert sind,
**dadurch gekennzeichnet, dass**
das erste Schutzeinrichtungselement (38) aus Metall hergestellt ist und zusätzlich zu der Außenseitenfläche den oberen Abschnitt des Auspufftopfs (33) abdeckt,
das zweite Schutzeinrichtungselement (39) aus Kunstharz hergestellt ist und das erste Schutzeinrichtungselement (38) von der Außenseite her abdeckt, während es den Abschnitt des ersten Schutzeinrichtungselements (38), welcher den oberen Abschnitt des Auspufftopfs (33) abdeckt, derart freigelegt lässt, dass er zur Außenseite freiliegt, und
eine Fahrtwindeinleitöffnung (61) in dem zweiten Schutzeinrichtungselement (39) ausgebildet ist, um den Fahrtwind zu der Außenfläche des Auspufftopfs (33) oder/und dem ersten Schutzeinrichtungselement (38) zu leiten, wobei
die Fahrtwindeinleitöffnung (61) vorwärts von dem Abschnitt angeordnet ist, an dem das erste und das zweite Schutzeinrichtungselement (38, 39) gemeinsam befestigt sind.

2. Auspuffsystem für ein Kraftrad nach Anspruch 1, wobei das erste Schutzeinrichtungselement (38) und das zweite Schutzeinrichtungselement (39) von dem Auspufftopf (33) gelagert sind, wobei jeweilige elastische Elemente (43, 52) dazwischen angeordnet sind.

3. Auspuffsystem für ein Kraftrad nach einem der Ansprüche 1 bis 2, wobei ein Endrohr (64) in dem Auspufftopf (33) derart ausgebildet ist, dass es von dem hinteren Ende des Auspufftopfs nach hinten vorsteht, und eine Endrohrabdeckung (65), welche aus Kunstharz hergestellt ist und welche das hintere Ende des Auspufftopfs (33) und das Endrohr (64) abdeckt, an dem Auspufftopf (33) angebracht ist.

4. Auspuffsystem für ein Kraftrad nach einem der Ansprüche 1 bis 3, **dadurch gekennzeichnet, dass** innerhalb des Auspuffrohrs (32) ein von einer körperabdeckung freigelegter Teil mit einer Auspuffrohrschutzeinrichtung (83) abgedeckt ist.

5. Auspuffsystem für ein Kraftrad nach einem der Ansprüche 1 bis 4, wobei das erste und das zweite Schutzeinrichtungselement (38, 39) miteinander in Kontakt gebracht sind, wobei ein Bund (51) dazwischen angeordnet ist.

## Revendications

1. Système d'échappement pour un motocycle, comprenant :
un pot d'échappement (33) raccordé à un tuyau d'échappement (32) s'étendant à partir d'une culasse (22) d'un corps de moteur (19), et
une protection (37) couvrant au moins partiellement l'extérieur du pot d'échappement (33),
dans lequel la protection (37) inclut :
un premier organe protecteur (38) qui couvre la surface latérale externe du pot d'échappement (33) ; et
un second organe protecteur (39) qui couvre le premier organe protecteur (38) à partir du côté externe ;
dans lequel les premier (38) et second (39) organes protecteurs sont fixés ensemble au pot d'échappement (33) et supportés par celui-ci,
**caractérisé en ce que**
le premier organe protecteur (38) est constitué d'un métal et en plus de la surface latérale externe, couvre la portion supérieure du pot d'échappement (33),
le second organe protecteur (39) est constitué d'une résine synthétique et couvre le premier organe protecteur (38) depuis le côté externe tout en laissant la portion du premier organe protecteur (38) couvrant la portion supérieure du pot d'échappement (33) non couverte de sorte qu'elle est exposée à l'extérieur, et un orifice d' introduction d'air en déplacement (61) est formé dans le second organe protecteur (39) de façon à guider l'air en déplacement vers l'une quelconque de la surface externe du pot d'échappement (33) et du premier organe protecteur (38), dans lequel
ledit orifice d' introduction d'air en déplacement (61) est situé vers l'avant de la portion à laquelle les premier et second organes protecteurs (38, 39) sont fixés.

2. Système d'échappement pour un motocycle selon la revendication 1, dans lequel le premier (38) et le second (39) organes protecteurs sont supportés par le pot d'échappement (33) avec des organes élastiques (43, 52) respectifs interposés entre eux.

3. Système d'échappement pour un motocycle selon l'une quelconque des revendications 1 à 2, dans lequel un tuyau d'échappement (64) est formé dans le pot d'échappement (33) de façon à faire saillie vers l'arrière de l'extrémité arrière du pot d'échappement, et un couvre-tuyau d'échappement (65), qui est constitué d'une résine synthétique, et qui couvre l'extrémité arrière du pot d'échappement (33) et du tuyau d'échappement (64), est attaché au pot d'échappement (33).

4. Système d'échappement pour un motocycle selon l'une quelconque des revendications 1 à 3, **caractérisé en ce que**, au sein du tuyau d'échappement (32), une partie exposée à partir d'un couvre-corps est couverte d'un protecteur de tuyau d'échappement (83).

5. Système d'échappement pour un motocycle selon l'une quelconque des revendications 1 à 4, dans lequel les premier et second organes protecteurs (38, 39) sont amenés en contact l'un avec l'autre avec un collier (51) interposé entre eux.
